# EUROPÄISCHE PATENTSCHRIFT

(11) **EP 1 001 111 B1**
(45) Veröffentlichungstag und Bekanntmachung des Hinweises auf die Patenterteilung: **25.08.2004**
(21) Anmeldenummer: 99122431.2
(22) Anmeldetag: 10.11.1999
(51) Int. Cl.: E04F 15/20, B32B 27/40

(54) **Trittschallisolierte Fussbodendiele**
Impact sound-isolated floor
Plancher avec isolation de bruits d'impact

(30) Priorität: 10.11.1998 DE 19851656
(43) Veröffentlichungstag der Anmeldung: 17.05.2000
(73) Patentinhaber: Schulte, Johannes, 59602 Rüthen-Meiste (DE)
(72) Erfinder: Schulte, Johannes, 59602 Rüthen-Meiste (DE)
(74) Vertreter: Ksoll, Peter, Dr.-Ing.

(56) Entgegenhaltungen:
- DE-A- 4 100 581
- DE-U- 9 316 905
- DE-U- 29 616 127
- FR-A- 2 221 465

## Beschreibung

Die Erfindung betrifft eine Fußbodendiele, die eine sich über ihre gesamte Unterseite erstreckende und auf der Unterseite vollflächig fixierte Schalldämpfungslage besitzt, gemäß den Merkmalen im Oberbegriff des Anspruchs 1.

Fertigparkett, Echtholzböden oder Laminatfußböden bestehen aus mehreren Reihen von in ihrer Konfiguration vorwiegend rechteckigen Fußbodendielen. Die Fußbodendielen zweier benachbarter Reihen werden üblicherweise versetzt zueinander verlegt. Auf einer Längsseite besitzen die Fußbodendielen durchgehende Nuten und auf der anderen Seite durchgehende Federn, die an die Nuten formschlüssig angepasst sind.

Die Fußbodendielen werden durch die Verbindung von Nut und Feder schwimmend verlegt das heißt der zusammengefügte Boden hat keine feste Verbindung mit dem Unterboden und stößt an den Raumwänden nicht an.

Ringsum verbleiben Dehnungsfugen, die das Material der Fußbodendielen bzw. den erstellten Fußbodenbelag frei arbeiten lassen.

Solche Fußbodenbeläge haben sich in der Praxis hervorragend bewährt.

Störend machen sich jedoch mitunter die schlechteren akustischen Werte der Fußbodendielen bemerkbar, insbesondere bezüglich Trittgeräuschen und dem damit verbundenen Raumschall. Aus diesen Gründen verlegt man die Fußbodendielen mit Zwischenlagen, üblicherweise aus Schaumfolie oder Kork oder ähnlichen Dämmmatten. Hierbei zählt es durch die DE 41 00 581 A1 und die DE 296 16 127 U1 zum Stand der Technik, zerkleinertes Gummimaterial in einen Trägerwerkstoff einzubetten und in Form von Platten für Böden und Wände zu verwenden. Diese Maßnahmen können jedoch nicht vollständig befriedigen, zumal auch die Verlegung der Zwischenlagen umständlich ist. Häufig verrutschen die Unterlagen beim Verlegen der Fußbodendielen oder werfen Falten, was sich nachteilig auf den Montagevorgang und die gewünschte Trittschalldämmung auswirken kann. Bekannte Schaumdämmunterlagen beziehen ihre Elastizität aus einer gasgefüllten Zellstruktur, wobei deren Elastizität nur so lange anhalten kann, wie durch dynamische Beanspruchung die Zellstrukturen noch nicht in Mitleidenschaft gezogen sind.

Durch die DE-GM 74 00 405 ist eine Fußbodendiele bekannt geworden, die eine sich über ihre gesamte Unterseite erstreckende und auf ihrer Unterseite vollflächig fixierte Schalldämpfungslage besitzt. Die DE 93 16 905 U1 empfiehlt beispielsweise eine Schalldämpfungslage aus einem Korkmaterial in einer Schichtdicke von 3 bis 12 cm. Nachteilig ist hieran, dass sich bautechnisch erhebliche Probleme beispielsweise im Bereich der Türen ergeben können und derartige Schalldämpfungslagen aufgrund ihrer Dicke schwer zu verlegen sind.

Der Erfindung liegt - ausgehend vom Stand der Technik - die Aufgabe zugrunde, eine Fußbodendiele anwendungstechnisch, insbesondere hinsichtlich ihrer Trittschalldämpfung, zu verbessern.

Die Aufgabe wird erfindungsgemäß mit den im kennzeichnenden Teil des Anspruchs 1 angegebenen Merkmalen gelöst.

Vorteilhafte Ausgestaltungen der erfindungsgemäßen Fußbodendiele bilden Gegenstand der abhängigen Ansprüche 2 und 3.

Die erfindungsgemäße Fußbodendiele zeichnet sich durch gegenüber herkömmlichen Fußbodendielen wesentlich verbesserte akustische Werte aus, so dass eine sehr gute Trittschalldämpfung gegeben ist. Die auf der Unterseite der Fußbodendiele vollflächig fixierte Schalldämpfungslage besteht aus einem Material, das eine zuverlässige Schalldämpfung bewirkt. Hier kommen solche Schalldämpfungslagen zum Einsatz mit einem Flächengewicht zwischen 2 kg/m² und 3,5 kg/m² und dennoch hoher Elastizität. Die Schalldämpfungslage unterdrückt eine Schallausbreitung durch eine starke, durch Schalldissipation bewirkte Dämpfung. Als Werkstoff sind vor allem homogene Materialien geeignet, bei denen die Schallenergie durch innere Reibung aufgezehrt wird.

Als besonders vorteilhaft werden Schalldämpfungslagen mit einem Raumgewicht zwischen 0,5 g/cm³ und 1,0 g/cm³, insbesondere zwischen 0,6 g/cm³ und 0,7 g/cm³ angesehen. Hierbei wirkt der ausgewogene Anteil massiver Gummiteilchen mit hohem spezifischen Gewicht mit den in der Schalldämpfungslage vorhandenen Hohlräumen bzw. Poren zusammen. Die Hohlräume sind porenartig offen, wodurch die Schalldämpfungslage im Prinzip sogar wasserdurchlässig ist. Gute Schalldämpfungswerte werden bei Porenvolumen zwischen 10 % und 30 %, insbesondere zwischen 15 % und 20 %, erreicht. Im Gegensatz zu schaumartigen Schalldämpfungslagen, bei denen die Dämpfungswirkung alterungsbedingt durch Verlust der Steifigkeit der geschlossenen Zellstruktur nachlassen kann, tritt dieser Effekt bei den nicht allseitig geschlossenen Poren nicht auf. Vielmehr tragen die Poren durch ihre offene Struktur dazu bei, dass Trittschall in die Schalldämpfungslage eindringt und in den Hohlräumen dissipiert, wodurch eine wirksame Trittschalldämpfung gewährleistet ist.

In praktischen Versuchen haben Schalldämpfungslagen aus einem Verbundwerkstoff aus durch Polyurethan gebundenen granulierten Gummikleinteilen sehr gute akustische Werte hinsichtlich der Trittschalldämpfung und des Raumschalls erreicht, da bei dieser Konfiguration die Elastizität der Schalldämpfungsunterlage auf der Volumenelastizität der Gummikleinteile basiert. Eine solche Schalldämpfungsunterlage besitzt eine äußerst hohe Dauerelastizität und Formbeständigkeit, die über mehrere Jahrzehnte wirksam sein kann. Die Praxis hat gezeigt, dass derartige Schalldämpfungslagen unempfindlich sind, auch gegenüber extrem starken statischen und dynamischen Belastungen, während gleichzeitig die Dauerelastizität konstant bleibt. Durch das hohe Rückstellvermögen dieses Verbundwerkstoffs sind Restverformungen kaum messbar.

Auch wenn grundsätzlich verschiedene Fügeverfahren zum Auftragen der Schalldämpfungslage auf die Unterseite einer Fußbodendiele möglich sind, wird für die Praxis eine klebetechnische Verbindung als vorteilhaft angesehen. Der Auftrag des Klebstoffs kann z.B. mittels Spritzpistole, Vierwalzenmaschine oder Gießmaschine erfolgen. Der Beschichtungsvorgang ist rationell und gut in eine bestehende Produktion einzubinden, weil die Substanz der Schalldämpfungslage mechanisch problemlos mit den für die Konfektionierung üblichen Produktionswerkzeugen gefertigt werden kann. Eine aufwendige Beschichtung von Einzelelementen ist nicht erforderlich.

Wichtig ist, dass der Klebstoff eine ausreichende Adhäsion zu der Schalldämpfungslage und der Unterseite der Fußbodendiele besitzt und bei gleichzeitiger hoher Elastizität das Ausbreiten von Schallwellen vermeidet und absorbiert. Als Klebstoffe eignen sich insbesondere Dispersionsklebstoffe auf Basis von Poly-Ethylenvinylacetat, Poly-Vinylacetatmaleinat-Copolymer, Poly-Acrylatvinylacetat-Copolymer, Poly-Butadienlatex oder Poly-Chloroprenlatex.

Um einen höheren Wirkungsgrad hinsichtlich der Trittschalldämpfung zu erreichen, sollten die Klebstoffbindemittel mit einem Anteil von 10 % bis 30 % mineralischer Füllstoffe, wie Calciumcarbonat, Kaolin, Calciumsulfat, Aluminiumhydroxid oder Bariumsulfat versetzt werden. Die Stoffe können allein oder in Kombination zum Einsatz kommen.

Die Dispersionen sind bevorzugt mit einem Anteil eines Diisocyanats zu vernetzen, insbesondere durch aliphatisches Polyisocyanat, Hexamethylen-1-6-diisocyanat (HDI) oder aromatisches Diphenylmethan-4-4-diisocyanat (PMDI). Die Isocyanate sind nach der Reaktion im Klebstoff fest eingebunden.

Auch der Einsatz von Schmelzklebstoffen auf Basis von Poly-Ethylenvinylacetat (EVA), Poly-Alphaolefin (APAO) oder reaktivem Poly-Urethan (PUR) ist denkbar. Ebenfalls eignen sich PUR-Prepolymere als Klebstoff. Diese können aufgebaut sein aus Polyetherolen und/oder PESolen und Isocyanaten. Als Isocyanate kommen 4,4-MDI und Homologe in Frage bei einem NCO-Gehalt von 2 % bis 18 %, vorzugsweise 6 % bis 14 %. Der Viskositätsbereich ist 2000 mPas bis 250000 mPas, vorzugsweise 6000 mPas bis 30000 mPas.

Die verwendete Schalldämpfungslage erfüllt die erforderlichen bautechnischen Kriterien hinsichtlich Alterungsbeständigkeit, Feuerfestigkeit und ist zudem wärmedämmend.

Die Absorptions- und Reflektionsschalldämpfung der erfindungsgemäßen Fußbodendiele ist besonders effektiv, wenn das Verhältnis der Dicke der Fußbodendiele zur Dicke der Schalldämpfungslage zwischen 1,5:1 und 5:1 liegt.

Da die Fußbodendiele und Schalldämpfungslage gemeinsam verlegt werden, ist auch der Zuschnitt problemlos möglich. Ein bisweilen umständliches Hantieren mit losen Zwischenlagen entfällt. Ein aus erfindungsgemäßen Fußbodendielen hergestellter Fußbodenbelag gewährleistet eine zuverlässige vollflächige Trittschalldämpfung. Hierdurch wird die Raumakustik verbessert und der Innenlärm reduziert, was zu einer Verbesserung des menschlichen Wohlbefindens beiträgt. Da die Schalldämpfungslage auch wärmeisolierend wirkt, kann zudem eine Verbesserung des Raumklimas erreicht werden.

Die Erfindung ist nachfolgend anhand eines Ausführungsbeispiels beschrieben.

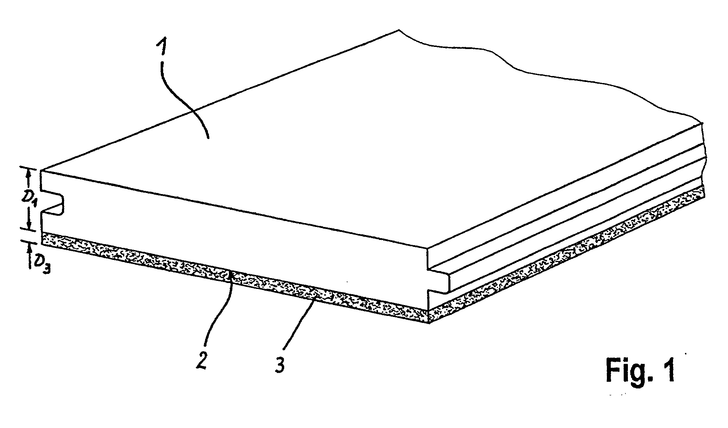

Die Figur 1 zeigt in perspektivischer Darstellungsweise einen Ausschnitt einer erfindungsgemäßen Fußbodendiele 1 mit einer auf ihrer Unterseite 2 fixierten Schalldämpfungslage 3. Die Schalldämpfungslage 3 ist auf die Unterseite 2 geklebt und erstreckt sich vollflächig über die gesamte Unterseite 2.

Die Schalldämpfungslage 3 besteht aus einem trittschallabsorbierenden Verbundwerkstoff aus PUR-gebundenen granulierten Gummikleinteilen mit einem Flächengewicht von 2 kg/m² bis 3,5 kg/m². Die Dicke der Schalldämpfungslage beträgt vorzugsweise 3,5 mm, wobei das Raumgewicht der Schalldämpfungslage 3 zwischen 0,6 g/cm³ und 0,7 g/cm³ liegt.

Das Verhältnis der Dicke D₁ der Fußbodendiele 1 zur Dicke D₃ der Schalldämpfungslage 3 liegt zwischen 1,5:1 und 5:1. In der Praxis beträgt die Dicke einer Fußbodendiele 1 meist 8 mm, so dass hier mit einer 3 mm bis 5 mm dicken Schalldämpfungslage 3 eine sehr gute Trittschalldämpfung erreicht wird.

### Bezugszeichenaufstellung

- 1 -: Fußbodendiele
- 2 -: Unterseite v. 1
- 3 -: Schalldämpfungsanlage

- D₁ -: Dicke v. 1
- D₃ -: Dicke v. 3

## Patentansprüche

1. Fußbodendiele, die eine sich über ihre gesamte Unterseite (2) erstreckende und auf der Unterseite (2) vollflächig fixierte Schalldämpfungslage (3) besitzt, **dadurch gekennzeichnet, dass** die Schalldämpfungslage (3) ein Flächengewicht zwischen 2 kg/m² und 3,5 kg/m² bei einer Dicke (D₃) von 3 mm bis 5 mm besitzt und aus einem Schallenergie durch innere Reibung aufzehrenden Verbundwerkstoff aus durch Polyurethan gebundenen granulierten Gummikleinteilen besteht;
dass das Raumgewicht der Schalldämpfungslage (3) zwischen 0,5 g/cm³ und 1,0 g/cm³ liegt;
dass die Schalldämpfungslage (3) offene Poren aufweist und
dass das Verhältnis der Dicke (D₁) der Fußbodendiele (1) zur Dicke (D₃) der Schalldämpfungslage (3) zwischen 1,5:1 und 5:1 beträgt.

2. Fußbodendiele nach Anspruch 1, **dadurch gekennzeichnet, dass** das Raumgewicht der Schalldämpfungsanlage (3) zwischen 0,6 g/cm³ und 0,7 g/cm³ liegt.

3. Fußbodendiele nach Anspruch 1 oder 2, **dadurch gekennzeichnet, dass** das Porenvolumen zwischen 10 % und 30 %, insbesondere zwischen 15 % und 20 %, liegt.

## Claims

1. A floor covering having a sound insulation layer (3) extending over its entire underside (2) and fixed to the underside (2) over its full surface, **characterised in that** the sound insulation layer (3) has a weight per unit area of between 2 kg/m² and 3.5 kg/m² with a thickness (D₃) of 3 mm to 5 mm and consists of a composite material which consumes sound energy by internal friction and which consists of polyurethane-bonded granulated small rubber particles;
**in that** the weight per unit volume of the sound insulation layer (3) is between 0.5 g/cm³ and 1.0 g/cm³;
**in that** the sound insulation layer (3) has open pores and
**in that** the ratio of the thickness (D₁) of the floor covering (1) to the thickness (D₃) of the sound insulation layer (3) is between 1.5:1 and 5:1.

2. A floor covering according to claim 1, **characterised in that** the weight per unit volume of the sound insulation layer (3) is between 0.6 g/cm³ and 0.7 g/cm³.

3. A floor covering according to claim 1 or 2, **characterised in that** the pore volume is between 10% and 30%, particularly between 15% and 20%.

## Revendications

1. Plancher possédant une couche d'isolation sonore (3) fixée de pleine surface sur la partie inférieure (2) et s'étendant sur toute sa partie inférieure, **caractérisé en ce que** la couche d'isolation sonore (3) possède un grammage entre 2 kg/m² et 3,5 kg/m² pour une épaisseur (D₃) de 3 mm à 5 mm et consiste en un matériau composite absorbant l'énergie sonore par friction interne, matériau composite consistant en petite particules de caoutchouc granulées ;
**en ce que** la masse volumique de la couche d'isolation sonore (3) se situe entre 0,5 g/cm³ et 1,0 g/cm³ ;
**en ce que** la couche d'isolation sonore (3) présente des pores ouverts et **en ce que** le rapport entre l'épaisseur (D₁) du plancher (1) et l'épaisseur (D₃) de la couche d'isolation sonore (3) se situe entre 1,5 :1 et 5 :1.

2. Plancher selon la revendication 1, **caractérisé en ce que** le poids spécifique de la couche d'isolation sonore (3) se situe entre 0,6 g/cm³ et 0,7 g/cm^{3.}

3. Plancher selon la revendication 1 ou 2, **caractérisé en ce que** le volume de pores se situe entre 10% et 30%, en particulier entre 15% et 20%.
